# FASCICULE DE BREVET EUROPEEN

(11) **EP 0 710 038 B1**
(45) Date de publication et mention de la délivrance du brevet: **01.03.2000**
(21) Numéro de dépôt: 95410122.6
(22) Date de dépôt: 24.10.1995
(51) Int. Cl.: H04N 11/18

(54) **Détecteur de réception d'un signal de télévision couleur codé selon la norme SECAM**
Detektor zur Empfangsdetektion eines nach dem SECAM-Standard kodierten Farbfernsehsignals
Detector for detecting reception of a colour television signal which is encoded according to the SECAM standard

(30) Priorité: 31.10.1994 FR 9413405
(43) Date de publication de la demande: 01.05.1996
(73) Titulaire: STMicroelectronics S.A., 94250 Gentilly (FR)
(72) Inventeur: Maldonado, Pierre-Jean, F-38180 Seyssins (FR)
(74) Mandataire: de Beaumont, Michel

(56) Documents cités:
- EP-A- 0 143 373
- EP-A- 0 245 038
- EP-A- 0 453 037
- EP-A- 0 474 568
- EP-A- 0 614 320
- IEEE TRANSACTIONS ON CONSUMER ELECTRONICS, vol. 37, no. 3, 30 Août 1991 NEW YORK US, pages 197-202, XP 000263185 IMBERT M. ET AL 'A FULL INTEGRATED AUTOMATIC MULTISTANDARD CHROMA DECODER'
- FUNKSCHAU, vol. 65, no. 1, 30 Décembre 1992 MUNCHEN DE, pages 64-71, XP 000327483 ACHTERBERG H. 'HOCHINTEGRIERTE FERNSEHSCHALTUNG'

## Description

La présente invention concerne un détecteur de réception de signaux codés selon la norme SECAM au sein d'un récepteur de signaux de télévision couleur. Elle s'applique plus particulièrement à la réalisation d'un tel dispositif au sein d'un circuit intégré de réception multistandard.

Un circuit de réception de signaux de télévision d'un récepteur multistandard comporte classiquement un dispositif d'identification automatique de la norme selon laquelle est codé le signal de télévision couleur et en particulier l'information de chrominance. Cette information de chrominance est extraite du signal reçu au moyen d'un filtre passe-bande permettant d'éliminer l'information de luminance du signal.

L'information de chrominance d'un signal de télévision couleur comporte deux paramètres, communément désignés B-Y et R-Y, qui une fois démodulés permettent au récepteur de retrouver la proportion des trois couleurs de base du signal, à savoir rouge, vert, bleu. Les deux paramètres B-Y et R-Y sont transmis en alternance, c'est-à-dire une ligne sur deux.

On distingue trois normes selon lesquelles peut être codé le signal de télévision couleur. Ces normes sont la norme SECAM, la norme PAL et la norme NTSC, et elles se distinguent par la manière dont sont modulées les informations devant être transmises.

Pour la norme SECAM, le signal est transmis en modulation de fréquence et d'amplitude. L'amplitude de la modulation contient l'information de luminance de la ligne considérée tandis que la fréquence de la modulation contient l'information de chrominance. La modulation de fréquence s'effectue en alternance, c'est-à-dire que la porteuse est différente pour les lignes B-Y et pour les lignes R-Y. Les fréquences des porteuses sont généralement, respectivement, 4,25 MHz et 4,406 MHz pour les signaux B-Y et R-Y. Les plages de modulation en fréquence respectives sont -350 à + 500 kHz pour le B-Y et -500 à + 350 kHz pour le R-Y.

Pour les normes PAL et NTSC, il s'agit d'une modulation quadratique en phase et en amplitude. L'amplitude de la modulation contient comme précédemment l'information de luminance, mais l'information de chrominance de la ligne considérée est fournie par la phase et l'amplitude de la modulation. La fréquence de la porteuse est généralement soit 4,43 MHz, soit 3,58 MHz.

La distinction entre les normes PAL et NTSC est que pour la norme PAL, le paramètre R-Y est transmis avec une alternance de phase de plus ou moins quatre-vingt-dix degrés.

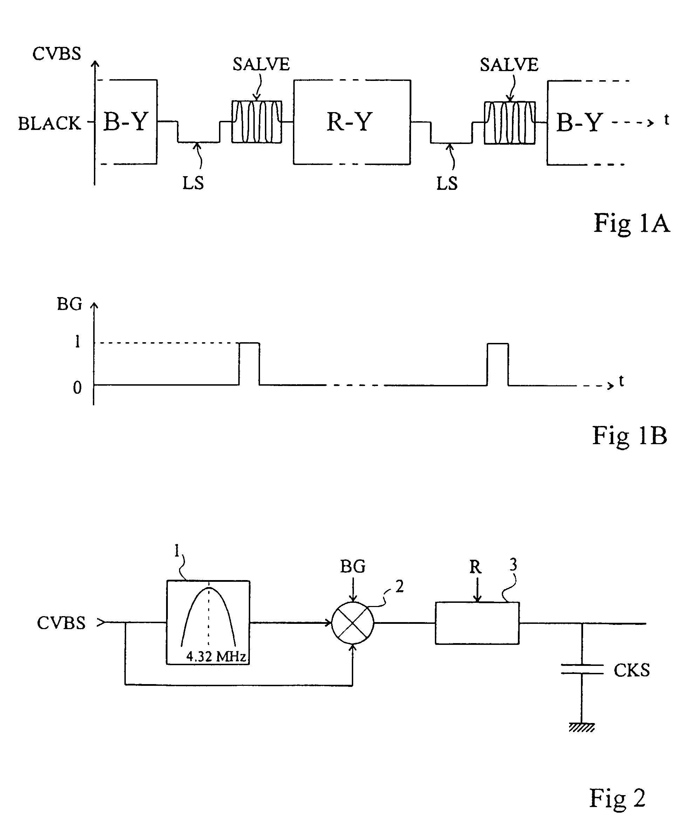

La figure 1A illustre sous forme de chronogrammes pour le standard SECAM, la forme du signal vidéo composite en bande de base CVBS qui est traité par un circuit d'identification de la norme de télévision.

Le signal CVBS comporte successivement un top de synchronisation ligne LS, un signal de référence SALVE et une ligne, alternativement B-Y et R-Y. Le top de synchronisation LS et le signal de référence SALVE sont transmis pendant chaque retour ligne.

L'identification de la norme au sein d'un récepteur multistandard s'effectue classiquement pendant la réception du signal de référence, communément appelé salve de référence, c'est-à-dire à chaque retour ligne. Cette salve de référence, précédée du top de synchronisation ligne LS, est centrée sur un palier correspondant au niveau BLACK d'absence de données de chrominance du paramètre considéré. En d'autres termes, la salve de référence SALVE s'inscrit dans un palier correspondant au niveau du "noir" du paramètre B-Y ou R-Y.

Pendant la salve de référence, le signal de chrominance correspond selon la norme SECAM, à la fréquence pure de la porteuse de la ligne considérée. Il correspond à une phase de 180° selon la norme NTSC, et à une phase de 135° ou de 225° en fonction de la ligne considérée selon la norme PAL. L'amplitude du signal pendant une salve de référence est normalisée, c'est-à-dire qu'elle est d'environ 300 mV crête à crête.

L'identification de la norme s'effectue soit sur la totalité de cette salve (PAL ou NTSC) soit pendant une partie de cette salve de référence (SECAM). La plage temporelle pendant laquelle s'effectue l'identification de la norme est communément appelée un portier BG, ou "Burst Gate" dans son appellation anglo-saxonne. La figure 1B représente sous forme de chronogramme le portier BG associé à la norme SECAM.

L'identification de la norme passe par l'emploi de filtres passe-bande. Les signaux de sorties de ces filtres permettent à la fois d'effectuer la "remise à l'heure" du récepteur, c'est-à-dire la synchronisation par rapport au type de ligne B-Y ou R-Y, et de déterminer la norme selon laquelle est codée l'information de chrominance.

Les différentes techniques classiquement utilisées pour identifier un signal codé selon la norme SECAM sont les suivantes.

Une première technique consiste à utiliser un filtre passe-bande externe accordé en dehors des deux fréquences des porteuses de 4,25 MHz et de 4,406 MHz. La sortie du filtre passe dans une porte commandée par le signal BG, puis on mesure la différence d'amplitude entre deux lignes consécutives. Si cette différence n'est pas nulle, on indique la présence d'un signal codé selon la norme SECAM.

Une deuxième technique consiste à générer les deux fréquences des porteuses relatives à la norme SECAM au moyen d'un oscillateur à quartz à 4,43 MHz servant par ailleurs à générer une fréquence de référence du détecteur de la norme PAL. Le signal est alors démodulé pendant le portier BG à l'aide de ces deux fréquences, puis on interprète séquentiellement les résultats issus de ces deux démodulations. Un inconvénient de cette technique est qu'elle nécessite un asservissement à la trame sur une large gamme de fréquences. Les boucles à verrouillage de phase utilisées pour ce faire sont difficiles à asservir, par exemple, en cas de variations de la température de fonctionnement (dérive de la gamme de fréquence à rattraper).

Une troisième technique consiste à utiliser un filtre passe-bande externe à coefficient de surtension élevé, centré entre les deux fréquences des porteuses, soit sur une fréquence d'environ 4,32 MHz, et à utiliser l'information d'amplitude ou l'information de phase en sortie du filtre.

La demande de brevet européen numéro 0 245 038 décrit un exemple de circuit qui utilise l'amplitude crête du signal de sortie d'un filtre passe-bande centré sur une fréquence de 4,33 MHz.

La figure 2 illustre le cas où l'information de phase en sortie d'un filtre passe-bande externe 1 est utilisée. La fréquence centrale peut dans certains cas être donnée par une référence de fréquence numérique. La sortie du filtre passe dans un comparateur de phase 2 échantillonné par le signal BG et qui compare la phase en sortie du filtre par rapport à la phase du signal entrant dans le filtre. La caractéristique de phase du signal de sortie du filtre donne des résultats de signes opposés une ligne sur deux si l'on est en présence d'un signal codé selon la norme SECAM, alors qu'ils sont de même signe si l'on est en présence d'un signal codé selon la norme PAL ou NTSC. Le comparateur 2 délivre donc, pendant les portiers BG, un signal qui en présence d'un signal entrant codé selon la norme SECAM est de même amplitude mais de signe opposé pour deux lignes consécutives.

La sortie du comparateur 2 est envoyée sur une bascule 3 commandée par le signal de "remise à l'heure" R. La sortie de la bascule 3 est utilisée pour charger ou décharger un condensateur de mémorisation CKS dont la tension indique le résultat d'identification de la norme SECAM. Ce résultat est exploité séquentiellement avec les résultats d'identification fournis par des condensateurs de mémorisation des détecteurs des autres normes.

Un inconvénient de cette troisième technique, qu'elle utilise l'information d'amplitude ou l'information de phase, est qu'il est difficile de rendre le filtre passe-bande externe utilisé, insensible à des variations de températures de fonctionnement qui induisent des erreurs d'identification sous l'effet du décalage de la fréquence centrale. Par exemple, si la fréquence centrale du filtre se trouve décalée et dépasse une des fréquences des porteuses de 4,25 MHz et 4,406 MHz, le résultat de la comparaison de phases sera interprété comme une absence d'identification de la norme SECAM.

L'évolution récente des récepteurs multistandard, en particulier l'intégration des filtres au sein des circuits en évitant le recours à des filtres externes, a entraîné l'apparition de circuits d'identification de norme dans lesquels tous les filtres sont commandés par une tension commune. Ainsi, les fréquences centrales des filtres peuvent toutes être pré-accordées de la même manière. La tolérance des circuits de commande existants cale la fréquence centrale des filtres à environ plus ou moins cinq pour cent de la fréquence d'accord théorique du filtre.

Si une telle commande commune des fréquences centrales des filtres autorise un pré-accord des filtres, par exemple pour que toutes les fréquences d'accord évoluent dans le même sens sous l'effet de variations de la température de fonctionnement, la plage de tolérance ne permet pas d'obtenir un centrage suffisamment précis de la fréquence d'un filtre passe-bande d'identification de la norme SECAM centré entre les deux fréquences des porteuses de cette norme. En effet, ces deux fréquences de 4,25 MHz et 4,406 MHz s'inscrivent dans la plage de tolérance (plus ou moins environ 200 kHz) d'un filtre pré-accordé sur la fréquence de 4,32 MHz. Le pré-accord commun à tous les filtres ne permet donc pas d'éviter les erreurs d'identification de la norme SECAM si la fréquence d'accord du filtre n'est pas située entre les deux fréquences des porteuses.

La présente invention vise à proposer un détecteur de réception d'un signal de télévision couleur codé selon la norme SECAM qui utilise un filtre pré-accordé par la commande générale des filtres d'un circuit intégré d'identification de la norme selon laquelle est codé le signal de télévision couleur et qui permette une identification de la norme SECAM qui soit fiable et insensible aux variations de la fréquence de pré-accord du filtre.

Pour atteindre cet objet, la présente invention prévoit un détecteur de réception d'un signal de télévision couleur codé selon la norme SECAM du type comportant un filtre pré-accordé par une commande générale des filtres d'un circuit intégré d'identification de la norme selon laquelle est codé le signal de télévision et un comparateur de phase recevant les signaux d'entrée et de sortie du filtre, et comportant des moyens pour asservir la fréquence dudit filtre sur la fréquence moyenne réelle de deux lignes consécutives du signal.

Selon un mode de réalisation de l'invention, lesdits moyens sont constitués par une boucle de contre réaction comportant le comparateur de phase et un condensateur de mémorisation de la valeur résultant de ladite comparaison de phase.

Une telle structure d'une boucle de contre réaction dans un détecteur de réception d'un signal de télévision couleur codé selon la norme SECAM est en principe connu du document EP-A- 0 474 568. Toutefois, ce détecteur connu prévoit le recours à une fréquence de référence fixe pour le centrage du filtre cloche et non pas à la fréquence moyenne de deux lignes consécutives.

Selon un mode de réalisation de l'invention, la sortie du comparateur de phase est reliée à une première borne du condensateur dont l'autre borne est connectée à la masse, et à un amplificateur à transconductance dont la sortie est envoyée sur une borne d'ajustement de la fréquence d'accord du filtre.

Selon un mode de réalisation de l'invention, la sortie du comparateur de phase est envoyée, par l'intermédiaire d'une bascule commandée par un signal de "remise à l'heure", sur un condensateur de mémorisation du résultat de l'identification.

Selon un mode de réalisation de l'invention, la fréquence théorique de pré-accord dudit filtre correspond à la fréquence moyenne entre les deux fréquences des porteuses de chrominance de la norme SECAM.

Selon un mode de réalisation de l'invention, ledit filtre est un filtre passe-haut à facteur de surtension élevé.

Selon un mode de réalisation de l'invention, ledit filtre est un filtre passe-bande et un déphaseur de 90° est placé en amont dudit filtre.

Selon un mode de réalisation de l'invention, le comparateur de phase est échantillonné pendant des salves de références que comporte le signal de télévision.

Selon un mode de réalisation de l'invention, le détecteur comporte en amont dudit filtre un étage de gain échantillonné pendant les périodes de retour ligne.

Selon un mode de réalisation de l'invention, la fréquence d'accord théorique dudit filtre est de 4,32 MHz.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A, 1B et 2 qui ont été décrites précédemment sont destinées à exposer l'état de la technique et le problème posé ;
la figure 3 représente un mode de réalisation d'un détecteur de réception d'un signal de télévision couleur codé selon la norme SECAM selon l'invention ; et
la figure 4 est un diagramme illustrant des caractéristiques de phase du détecteur représenté à la figure 3.

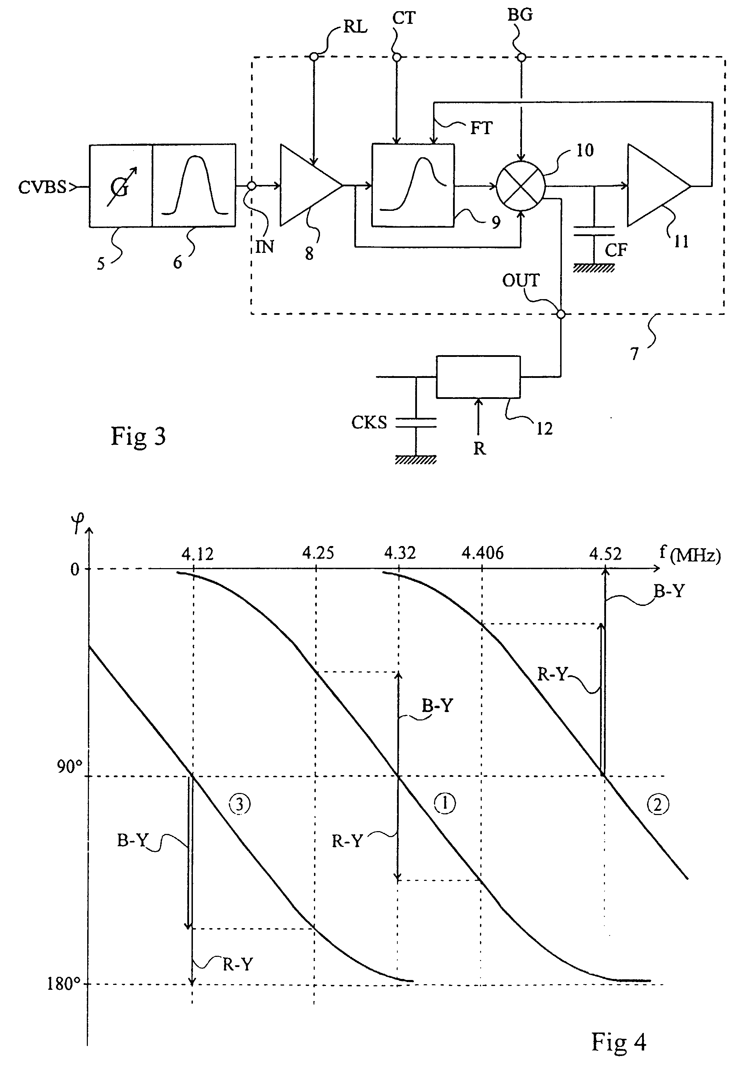

Comme le montre la figure 3, le signal vidéo composite en bande de base CVBS tel que représenté à la figure 1A est envoyé à un amplificateur à gain contrôlé 5. Un dispositif d'élimination de composante continue (non représenté), par exemple un condensateur de liaison est placé en amont de l'amplificateur 5. L'amplificateur 5 permet d'augmenter le niveau du signal reçu à un niveau normalisé pour en autoriser le décodage. L'amplificateur 5 est associé à un filtre cloche 6 d'extraction de l'information de chrominance présente dans le signal. La sortie de l'ensemble amplificateur 5 / filtre 6 fournit un signal d'amplitude normalisée (environ 300 mV crête à crête) centré sur un niveau de référence BLACK qui correspond au niveau d'absence de données de chrominance du paramètre considéré.

La sortie du filtre 6 constitue le signal destiné à être exploité par le détecteur de norme. Ce signal est donc envoyé sur une première entrée IN d'un détecteur 7 de réception de signaux codés selon la norme SECAM selon l'invention.

Trois autres entrées RL, CT et BG du détecteur 7 reçoivent des signaux de commande qui sont classiquement présents au sein d'un circuit intégré d'identification de la norme de codage d'un signal de télévision.

L'entrée RL reçoit un signal d'échantillonnage pendant les périodes de retour ligne (englobant le top de synchronisation et la salve de référence). Ce signal RL est envoyé sur une entrée d'échantillonnage d'un étage de gain 8 sur lequel est envoyé le signal arrivant dans le détecteur 7 par l'entrée IN. L'étage de gain 8 élimine ainsi les lignes actives B-Y et R-Y du signal afin d'éviter une pollution éventuelle du signal utilisé par le détecteur 7 par les informations de chrominance actives des lignes B-Y et R-Y.

La sortie de l'étage 8 est envoyée à un filtre passe-haut 9 à facteur de surtension élevé et disposant de deux bornes respectivement de pré-accord et d'ajustement de sa fréquence de coupure. La borne de pré-accord reçoit le signal CT qui correspond à la commande générale des filtres du circuit d'identification dans lequel est intégré le détecteur 7. Le filtre 9 est donc pré-accordé par la commande commune à tous les filtres du circuit intégré. Comme il a été dit plus haut, cette commande cale le filtre 9 sur sa fréquence d'accord, ici de coupure, théorique avec une tolérance de plus ou moins environ cinq pour cent. La fréquence de coupure théorique du filtre 9 est fixée entre les deux fréquences des porteuses de chrominance de la norme SECAM, soit 4,32 MHz.

La sortie du filtre 9 délivre une information proportionnelle à l'écart de fréquence entre le signal d'entrée dans le filtre 9 et la fréquence de coupure réelle du filtre. Cette information est envoyée sur une première entrée d'un comparateur de phase 10 dont une deuxième entrée reçoit le signal entrant dans le filtre 9. Le filtre 9 assure un déphasage de 90° nécessaire au comparateur de phase 10.

Le comparateur 10 est échantillonné pendant les plages temporelles d'identification associées à la norme SECAM en recevant sur une entrée de commande le portier BG. Le comparateur de phase 10 délivre donc, pendant le portier BG, un signal proportionnel à la différence de phase entre le signal de sortie de l'étage 8 et le signal de sortie du filtre 9. Ce signal est ainsi proportionnel à l'écart de fréquence entre la fréquence de coupure réelle du filtre 9 et la fréquence du signal entrant, donc de la porteuse de la ligne considérée.

Le courant de sortie du comparateur 10 est utilisé pour charger ou décharger un condensateur CF. La tension ainsi mémorisée traverse un amplificateur à transconductance 11 dont la sortie est envoyée sur la borne FT d'ajustement de la fréquence d'accord du filtre 9. En variante, l'entrée FT du filtre 9 pourra être commandée en tension. Cette entrée FT constitue une entrée d'ajustement précis du filtre en fonction de l'écart de fréquence mesuré par le comparateur de phase 10.

Ainsi, la fréquence d'accord du filtre 9 est asservie sur la fréquence du signal entrant et elle va se caler sur la valeur moyenne des fréquences des porteuses des lignes du signal CVBS pendant le portier BG. Le facteur de surtension du filtre 9 est élevé, par exemple d'environ 25, pour obtenir un gain suffisant de la boucle d'asservissement.

La sortie du comparateur de phase 10 est également envoyée sur une borne de sortie OUT du détecteur selon l'invention. Cette borne de sortie est utilisée pour charger un condensateur CKS, par l'intermédiaire d'une bascule 12 commandée par le signal de "remise à l'heure" R.

Le condensateur CKS constitue comme précédemment le condensateur de mémorisation du résultat de la détection associée à la norme SECAM. De manière classique, le niveau mémorisé dans ce condensateur CKS est examiné séquentiellement avec les niveaux mémorisés dans les condensateurs associés aux résultats des détecteurs (non représentés) des normes PAL et NTSC. En pratique et comme cela est représenté à la figure 3, le comparateur de phase 10 dispose de deux sorties indépendantes afin d'éviter que la tension mémorisée dans le condensateur CF ne pollue le résultat de la détection envoyé sur la bascule 12.

Selon une variante de réalisation non représentée, le filtre passe-haut 9 est remplacé par un déphaseur de 90° des signaux de sortie de l'étage de gain 8 associé à un filtre passe-bande dont la fréquence centrale théorique est de 4,32 MHz.

La figure 4 illustre trois cas de caractéristiques de phase du filtre 9 en fonction de la valeur de sa fréquence d'accord réelle. Ces cas correspondent respectivement aux caractéristiques de phase lorsque le filtre est pré-accordé sur sa fréquence théorique et lorsque la fréquence de pré-accord du filtre est décalée par ajout ou soustraction par rapport à cette fréquence théorique, d'une valeur représentant la valeur maximale de tolérance du pré-accord.

Si le filtre 9 est accordé sur sa fréquence théorique (caractéristique ①), le signal de sortie du filtre sera de même amplitude mais de signe opposé pour deux lignes consécutives, respectivement B-Y et R-Y, à l'apparition d'un signal codé selon la norme SECAM. Le courant moyen en sortie du comparateur de phase 10 sur deux lignes consécutives est nul. Ainsi, aucune compensation n'est effectuée sur la borne d'asservissement FT du filtre. Par ailleurs, le résultat mémorisé dans le condensateur CKS indique l'identification de la norme SECAM.

Si la fréquence de coupure du filtre est décalée par ajout de la valeur maximale de tolérance du pré-accord (soit d'environ plus 200 kHz) par rapport à sa fréquence théorique (caractéristique ②), les amplitudes de deux lignes consécutives sont de valeurs différentes mais de même signe. L'amplitude lors d'une ligne B-Y est supérieure à l'amplitude lors de la ligne R-Y suivante.

Si à l'inverse (caractéristique ③), la fréquence de coupure du filtre est décalée par soustraction de la valeur maximale de tolérance du pré-accord (soit d'environ moins 200 kHz) par rapport à sa fréquence théorique, les amplitudes de deux lignes consécutives sont toujours de même signe mais opposé par rapport au cas précédent (caractéristique ②) et l'amplitude lors d'une ligne B-Y est inférieure à l'amplitude lors de la ligne R-Y suivante.

Dans les deux derniers cas ainsi que dans les cas intermédiaires, le filtre va progressivement se recentrer sur la fréquence moyenne des porteuses de deux lignes consécutives, soit en principe sa fréquence théorique de 4,32 MHz. En effet, la contre-réaction appliquée sur l'accord du filtre 9 va se stabiliser pour un courant moyen de sortie du comparateur de phase 10 qui sera nul sur deux lignes consécutives. Les amplitudes correspondantes à deux lignes consécutives redeviendront donc égales et la norme SECAM sera identifiée.

On veillera cependant à ce que le filtrage apporté par le condensateur CF soit suffisant pour éviter des sauts de fréquence trop importants d'une ligne à l'autre sous l'effet de la boucle d'asservissement du filtre. De plus, le comparateur de phase doit être dimensionné pour que sa plage de variation en courant permette une plage d'asservissement en fréquence du filtre correspondant à la plage de tolérance du pré-accord. En d'autres termes, la plage de variation en courant du comparateur de phase doit autoriser une plage d'asservissement de plus ou moins environ 200 kHz et le condensateur CF doit éviter que l'instabilité de ce courant n'entraîne un décalage de la fréquence d'accord du filtre. Pour une excursion en fréquence d'environ plus ou moins 70 kHz qui correspond à la différence entre les deux fréquences des porteuses de la norme SECAM, l'accord ligne à ligne pourra avoir une instabilité d'environ 3 kHz sans altérer les performances de la boucle d'asservissement.

A titre d'exemple, le courant moyen du comparateur de phase est fixé à environ 700 nA et le condensateur CF est d'environ 40 pF.

Dans le cas d'une réception d'un signal codé selon la norme SECAM, le détecteur 3 va donc toujours s'accorder sur la fréquence moyenne des porteuses de deux lignes consécutives. Ainsi, il n'existe plus de cas où le détecteur délivrera un résultat d'absence d'identification si la norme SECAM est présente.

En cas de réception d'un signal codé selon la norme PAL ou NTSC à 4,43 MHz, le filtre va s'accorder sur la fréquence de la porteuse de ce signal à 4,43 MHz et l'amplitude en sortie du comparateur de phase sera quasi-nulle. Ainsi, le condensateur CKS indiquera une absence d'identification de la norme SECAM.

En cas de réception d'un signal codé selon la norme PAL ou NTSC à 3,58 MHz, le filtre va s'accorder sur la fréquence de pré-accord dans la mesure où la fréquence de 3,58 MHz est hors de la plage de tolérance de plus ou mois cinq pour cent. Les amplitudes en sortie du comparateur de phase 10 seront alors les mêmes et de même signe pour deux lignes consécutives. Ainsi, le condensateur CKS indiquera sous l'effet du signal de remise à l'heure une absence d'identification de la norme SECAM.

Un autre avantage du détecteur selon l'invention est que l'ajustement de l'accord du filtre sur la moyenne entre les deux fréquences réelles des porteuses de deux lignes consécutives permet une détection de la norme SECAM même si les fréquences des porteuses du signal reçu ne correspondent pas exactement aux fréquences théoriques, par exemple sous l'effet de bruit.

L'invention permet donc d'identifier de manière sûre l'apparition d'un signal de télévision couleur codé selon la norme SECAM.

Bien entendu, la présente invention telle que définie par les revendications est susceptible de diverses variantes et modifications qui apparaîtront à l'homme de l'art. En particulier, chacun des composants décrits pourra être remplacé par un ou plusieurs éléments remplissant la même fonction. De plus, la réalisation pratique des différents constituants du détecteur selon l'invention en fonction de leur fonctionnalité et des contraintes qu'ils doivent respecter est à la portée de l'homme du métier.

## Revendications

1. Détecteur de réception d'un signal de télévision couleur codé selon la norme SECAM du type comportant un filtre (9) pré-accordé par une commande générale (CT) des filtres d'un circuit intégré d'identification de la norme selon laquelle est codé le signal de télévision et un comparateur de phase (10) recevant les signaux d'entrée et de sortie du filtre, caractérisé en ce qu'il comporte des moyens pour asservir la fréquence dudit filtre (9) sur la fréquence moyenne réelle de deux lignes (R-Y, B-Y) consécutives du signal.

2. Détecteur de réception d'un signal de télévision couleur codé selon la norme SECAM selon la revendication 1, caractérisé en ce que lesdits moyens sont constitués par une boucle de contre réaction comportant le comparateur de phase (10) et un condensateur (CF) de mémorisation de la valeur résultant de ladite comparaison de phase.

3. Détecteur de réception d'un signal de télévision couleur codé selon la norme SECAM selon la revendication 2, caractérisé en ce que la sortie du comparateur de phase (10) est reliée à une première borne du condensateur (CF) dont l'autre borne est connectée à la masse, et à un amplificateur à transconductance (11) dont la sortie est envoyée sur une borne (FT) d'ajustement de la fréquence d'accord du filtre (9).

4. Détecteur de réception d'un signal de télévision couleur codé selon la norme SECAM selon l'une quelconque des revendications 1 à 3, caractérisé en ce que la sortie du comparateur de phase (10) est envoyée, par l'intermédiaire d'une bascule commandée par un signal de "remise à l'heure", sur un condensateur (CKS) de mémorisation du résultat de l'identification.

5. Détecteur de réception d'un signal de télévision couleur codé selon la norme SECAM selon l'une quelconque des revendications 1 à 4, caractérisé en ce que la fréquence théorique de pré-accord dudit filtre (9) correspond à la fréquence moyenne entre les deux fréquences des porteuses de chrominance de la norme SECAM.

6. Détecteur de réception d'un signal de télévision couleur codé selon la norme SECAM selon la revendication 5, caractérisé en ce que ledit filtre est un filtre passe-haut (9) à facteur de surtension élevé.

7. Détecteur de réception d'un signal de télévision couleur codé selon la norme SECAM selon la revendication 5, caractérisé en ce que ledit filtre est un filtre passe-bande, et en ce qu'un déphaseur de 90° est placé en amont dudit filtre.

8. Détecteur de réception d'un signal de télévision couleur codé selon la norme SECAM selon l'une quelconque des revendications 1 à 7, caractérisé en ce que le comparateur de phase (10) est échantillonné pendant des salves de références que comporte le signal de télévision.

9. Détecteur de réception d'un signal de télévision couleur codé selon la norme SECAM selon l'une quelconque des revendications 1 à 8, caractérisé en ce qu'il comporte en amont dudit filtre (9) un étage de gain (8) échantillonné pendant les périodes de retour ligne (RL).

10. Détecteur de réception d'un signal de télévision couleur codé selon la norme SECAM selon l'une quelconque des revendications 1 à 9, caractérisé en ce que la fréquence d'accord théorique dudit filtre (9) est de 4,32 MHz.

## Patentansprüche

1. Detektor zur Empfangsdetektion eines nach dem SECAM-Standard kodierten Farbfernsehssignals, vom Typ, welcher ein durch eine allgemeine Steuerung (CT) der Filter einer integrierten Schaltung zur Identifizierung der Norm, nach welcher das Fernsehsignal kodiert ist, vorabgestimmtes Filter (9) sowie einen Phasenkomparator (10) aufweist, dem die Ein- und Ausgangssignale des Filters zugeführt werden, dadurch **gekennzeichnet**, daß der Detektor Mittel zur Regelung der Frequenz des genannten Filters (9) auf die mittlere reale Frequenz der beiden aufeinanderfolgenden Zeilen (R-Y, B-Y) aufweist.

2. Detektor zur Empfangsdetektion eines nach dem SECAM-Standard kodierten Farbfernsehsignals, nach Anspruch 1, dadurch gekennzeichnet, daß die genannnten Mittel aus einer Gegenkopplungsschleife bestehen, welche den Phasenkomparator (10) und einen Kondensator (CF) zur Speicherung des aus dem Phasenvergleich resultierenden Werts aufweist.

3. Detektor zur Empfangsdetektion eines nach der SECAM-Norm kodierten Farbfernsehsignals, nach Anspruch 2, dadurch gekennzeichnet, daß der Ausgang des Phasenkomparators (10) mit einem ersten Anschluß des Speicherkondensators (CF), dessen anderer Anschluß mit Masse verbunden ist, sowie mit einem Transkonduktanz-Verstärker (11) verbunden ist, dessen Ausgangsgröße einem Anschluß (FT) für die Einstellung der Abstimmfrequenz des Filters (9) zugeführt wird.

4. Detektor zur Empfangsdetektion eines nach der SECAM-Norm kodierten Farbfernsehsignals, nach einem der Ansprüche 1 bis 3, dadurch gekennzeichnet, daß die Ausgangsgröße des Phasenkomparators (10) über ein durch ein 'Zeit-Rückstell'-Signal gesteuertes Kippschaltungs- bzw. Flip-Flop-Glied einem Speicherkondensator (CKS) zur Speicherung des Identifizierungs-Ergebnisses zugeführt wird.

5. Detektor zur Empfangsdetektion eines nach dem SECAM-Standard kodierten Farbfernsehsignals, nach einem der Ansprüche 1 bis 4, dadurch gekennzeichnet, daß die theoretische Vor-Abstimmungsfrequenz des genannten Filters (9) der Mittelfrequenz zwischen den beiden Chrominanz-Trägerfrequenzen der SECAM-Norm entspricht.

6. Detektor zur Empfangsdetektion eines nach dem SECAM-Standard kodierten Farbfernsehsignals, nach Anspruch 5, dadurch gekennzeichnet, daß das genannte Filter ein Hochpaßfilter (9) mit hohem Q-Faktor ist.

7. Detektor zur Empfangsdetektion eines nach der SECAM-Norm kodierten Farbfernsehsignals, nach Anspruch 5, dadurch gekennzeichnet, daß das genannte Filter ein Bandpaßfilter ist und stromaufwärts des Filters ein 90°-Pasenschieber angeordnet ist.

8. Detektor zur Empfangsdetektion eines nach dem SECAM-Standard kodierten Farbfernsehsignals, nach einem der Ansprüche 1 bis 7, dadurch gekennzeichnet, daß der Phasenkomparator (10) während im Fernsehsignal enthaltenen Bezugsbursts abgefragt bzw. gesampelt wird.

9. Detektor zue Empfangsdetektion eines nach der SECAM-Norm kodierten Farbfernsehsignals, nach einem der Ansprüche 1 bis 8, dadurch gekennzeichnet, daß er stromaufwärts des genannten Filters (9) eine Verstärkungsstufe (8) aufweist, die während der Zeilenrücklaufperioden (RL) gesampelt wird.

10. Detektor zur Empfangsdetektion eines nach der SECAM-Norm kodierten Farbfernsehsignals, nach einem der Ansprüche 1 bis 9, dadurch gekennzeichnet, daß die theoretische Abstimmfrequenz des Filters (9) 4,32 MHz ist.

## Claims

1. A detector for detecting reception of a color television signal coded according to the SECAM standard comprising a filter (9) pretuned by a general control (CT) of filters of an integrated circuit for identifying the standard according to which the television signal is coded, a phase comparator (10) receiving the input and output signals of the filter, characterized in that it comprises means for servo-controlling the frequency of said filter (9) to the mean frequency of two consecutive lines (R-Y, B-Y) of the signal.

2. A detector for detecting reception of a color television signal coded according to the SECAM standard according to claim 1, characterized in that said means comprise a reverse feedback loop including the phase comparator (10) and a capacitor (CF) for storing a value resulting from said phase comparison.

3. A detector for detecting reception of a color television signal coded according to the SECAM standard according to claim 2, characterized in that the output of the phase comparator (10) is connected to a first terminal of the capacitor (CF), the other terminal of which is grounded, and to a transconductance amplifier (11), the output of which is sent on a terminal (FT) for adjusting the tuning frequency of the filter (9).

4. A detector for detecting reception of a color television signal coded according to the SECAM standard according to any of claims 1 to 3, characterized in that the output of the phase comparator (10) is sent, via a flip-flop controlled by a "time reset" signal, to a capacitor (CKS) for storing the result of the identification.

5. A detector for detecting reception of a color television signal coded according to the SECAM standard according to any of claims 1 to 4, characterized in that a theoretical pretuning frequency of said filter (9) corresponds to the mean frequency between the two frequencies of the chrominance carriers of the SECAM standard.

6. A detector for detecting reception of a color television signal coded according to the SECAM standard according to claim 5, characterized in that said filter is a high-pass filter (9) with a high Q-factor.

7. A detector for detecting reception of a color television signal coded according to the SECAM standard according to claim 5, characterized in that said filter is a band-pass filter, and a 90° phase shifter is provided upstream of said filter.

8. A detector for detecting reception of a color television signal coded according to the SECAM standard according to any of claims 1 to 7, characterized in that the phase comparator (10) is sampled during reference bursts included in the television signal.

9. A detector for detecting reception of a color television signal coded according to the SECAM standard according to any of claims 1 to 8, characterized in that it includes upstream of said filter (9), a gain stage (8) sampled during the line fly-back periods (RL).

10. A detector for detecting reception of a color television signal coded according to the SECAM standard according to any of claims 1 to 9, characterized in that the theoretical tuning frequency of said filter (9) is 4.32 MHz.
